# EUROPÄISCHE PATENTSCHRIFT

(11) **EP 1 679 358 B1**
(45) Veröffentlichungstag und Bekanntmachung des Hinweises auf die Patenterteilung: **14.10.2009**
(21) Anmeldenummer: 05000411.8
(22) Anmeldetag: 11.01.2005
(51) Int. Cl.: C09K 3/24, F25C 3/04, C08F 18/04, C08F 20/18

(54) **Schneezusammensetzung und Verfahren zur Erzeugung von Kunstschnee**
Snow composition and method for making artificial snow
Composition de neige et méthode de fabrication de neige artificielle

(43) Veröffentlichungstag der Anmeldung: 12.07.2006
(73) Patentinhaber: Brink, Gerhard, 84489 Burghausen (DE)
(72) Erfinder: Brink, Gerhard, 84489 Burghausen (DE)
(74) Vertreter: Hofstetter, Alfons J.

(56) Entgegenhaltungen:
- EP-A- 0 440 256
- EP-A- 0 950 673
- EP-A- 1 457 541
- WO-A-86/02936
- DE-A1- 2 459 162
- US-A- 5 286 551
- DATABASE WPI Section Ch, Week 200316 Derwent Publications Ltd., London, GB; Class A14, AN 2003-164676 XP002332164 & KR 2002 074 406 A (KO J M) 30. September 2002 (2002-09-30)

## Beschreibung

Die vorliegende Erfindung betrifft eine Schneezusammensetzung bestehend aus Schnee, ausgewählt aus der Gruppe natürlicher Schnee, durch eine Schneemaschine erzeugter Kunstschnee und mit Anteilen Eis versetzter natürlicher Schnee oder Kunstschnee, und mindestens einem gel-bildenden Polymer. Die Erfindung betrifft weiterhin ein Verfahren zur Herstellung von Kunstschnee und eine Schneeauflage.

Gel-bildende Polymere sind in der Natur bekannt, z. B. Pektinate, Alginate oder Agarose und andere sowie auch Umsetzungsprodukte von natürlichen Polymeren, z. B. Derivate diverser Kohlehydrate sowie von Proteinen. Der Nachteil natürlicher Polymere ist die häufig zu schnelle Zersetzung durch Mikroorganismen, ihre je nach Herkunft und Ernte schwankenden Eigenschaften und die durch unterschiedliche Verfügbarkeit wechselnden Preise. Es sind auch gel-bildende synthetische Polymere auf der Basis von Acrylsäure und hauptsächlich aus Acrylsäure bestehenden Derivaten sowie auf der Basis von Polyethylen- bzw. Polypropylenglykol bekannt Die US-A-5 286 551 offenbart Copolymere von Polyethylen und Vinyl-acetat, Methyl-methacrylat und Ethylacrylat und ihren Einsatz in Kunstschnee. Aus der EP 0 232 273 B1 und der EP 0 440 256 B1 ist bekannt, dass sich mit Hilfe eines Zusatzes von gelbildenden Polymeren zu Schnee oder zu dem zur Beschneiung mit Schneemaschinen verwendeten Wasser Schneezusammensetzungen erzielen lassen, die bessere Eigenschaften hinsichtlich der Befahrbarkeit wie auch der Haltbarkeit - auch hinsichtlich höherer Umgebungstemperaturen - als natürlicher Schnee aufweisen. Nachteilig bei diesen Produkten ist jedoch die zu geringe biologische Abbaubarkeit.

Es ist daher Aufgabe der vorliegenden Erfindung, eine Schneezusammensetzung bereitzustellen, die einerseits eine deutlich höhere Beständigkeit als natürlicher Schnee aufweist und deren Zusätze andererseits biologisch abbaubar sind.

Es ist weiterhin Aufgabe der vorliegenden Erfindung, ein Verfahren zur Herstellung von Kunstschnee bereitzustellen, der einerseits eine deutlich höhere Beständigkeit als natürlicher Schnee aufweist und deren Zusätze andererseits biologisch abbaubar sind.

Zur Lösung dieser Aufgaben dienen die Merkmale der unabhängigen Ansprüche.

Vorteilhafte Ausgestaltungen sind in den Unteransprüchen beschrieben.

Überraschenderweise konnten die Aufgaben mit der Entwicklung und Herstellung einer Schneezusammensetzung unter Verwendung von Schnee, ausgewählt aus der Gruppe natürlicher Schnee, durch eine Schneemaschine erzeugter Kunstschnee und mit Anteilen Eis versetzter natürlicher Schnee oder Kunstschnee, und gel-bildenden Polymeren auf Alkenylester-Copolymerisaten, wie sie in der EP 0 950 673 B1 beschrieben sind, gelöst werden. Die Alkenylester-Copolymerisate enthalten dabei ein oder mehrere Monomere aus der Gruppe der Alkenylester von unverzweigten oder verzweigten Alkylcarbonsäuren mit 1 bis 18 C-Atomen gemäß der Formel 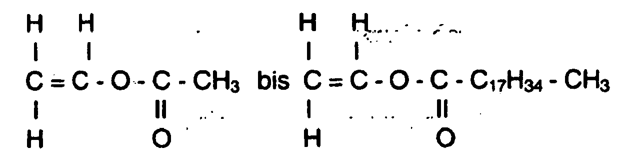 und 0,1 bis 1,0%, bezogen auf das Gewicht aller eingesetzten Monomere, doppelt oder mehrfach ungesättigte Verbindungen als Vernetzungsmittel. Das Vernetzungsmittel bewirkt eine Vernetzung des an sich wasserlöslichen Polymeren. Der Anteil an gel-bildendem Polymer beträgt dabei vorteilhafterweise zwischen 0,1 und 10 Gewichtsprozent bezogen auf den Anteil Schnee. Des Weiteren liegt vorteilhafterweise das gel-bildende Polymer als schwach saure Dispersion mit einem pH-Wert zwischen 4,0 und 5,5 vor. Als weiterer Vorteil hat sich ein pH-Wert des verwendeten Schnees zwischen 6,0 und 9,0 herausgestellt. Die resultierende erfindungsgemäße Schneezusammensetzung weist einerseits eine deutlich höhere Beständigkeit als natürlicher Schnee auch bei höheren Temperaturen auf und ist andererseits biologisch abbaubar. Damit ist es auch möglich, die Schneezusammensetzung in natürlicher Umgebung beziehungsweise im Freien zu verwenden. Zudem hat sich herausgestellt, dass die Schneezusammensetzung bis zum Stadium der natürlichen Verrottung die Haftung von Erde, Sand und Gestein aneinander verbessert, so dass vorteilhafterweise eine zu starke Erosion stark befahrener Skipisten verhindert wird. Die höhere Beständigkeit der erfindungsgemäßen Schneezusammensetzung schützt zudem eine darunterliegende Grasnabe gegen Frost und Ausschwemmungen.

Des Weitern können die Alkenylester-Copolymerisate ethylenisch ungesättigte Mono- und/oder Di-Carbonsäuren mit 3 bis 11 C-Atomen oder Teilester von Poly-Carbonsäuren mit Alkoholen zwischen 1 und 18 C-Atomen und/oder Teilester von gesättigten Polycarbonsäuren mit ethylenisch ungesättigten mit mindestens 3 C-Atomen sowie stabilisierend wirkende Comonomere, wie z. B. Ethenylsulfonat, Acrylsäure, Acrylamid oder N-Methylolacrylamid enthalten.

Die Copolymerisate können auch ethylenisch ungesättigte Protonen-Akzeptoren, z. B. Amino-Gruppen, enthalten, die sauer reagierende Substanzen besonders gut binden können. Für die Polymerisation werden außerdem 0,1 bis 15%, berechnet auf den Feststoffgehalt der fertigen Dispersion oder Suspension, eines wasserlöslichen, biologisch verträglichen Polymeren als Schutzkolloid und gegebenenfalls bis zu 10%, bezogen auf das Gewicht aller eingesetzten Monomeren, ebenfalls biologisch verträglicher Emulgatoren verwendet. Die Schutzkolloide sind dabei Polyvinylalkohole mit einem Verseifungsgrad von 70 bis 97 Mol% und/oder wasserlösliche Cellulosederivate, die durch Carboxymethylierung, Carboxypropylierung, Hydroxypropylierung, Hydroxyethylierung oder Veretherung mit Methylgruppen hergestellt wurden und/oder Dextrane und/oder Polyacrylsäuren und Derivate, Polyacrylamid, wasserlösliche Pölyacrylsäüre- und Polyacrylamid-Copolymerisate und/oder Gelatine und/oder Kasein und/oder chemisch modifizierte Stärken.

Die biologisch verträglichen, anionischen Emulgatoren sind Alkylsulfite mit bis zu 18 C-Atomen im Alkylrest und/oder Alkylarylpolyethersulfonate mit 6 bis 18 C-Atomen im Alkylrest und mit bis zu 40 Ethylen- oder Propylen-Einheiten und/oder Alkylpolyethersulfate mit 6 bis 18 C-Atomen im Alkylrest und/oder Alkyl- oder Alkylarylsulfonate mit 6 bis 18 C-Atomen und/oder Ester und Halbester der Sulfobernsteinsäure mit einwertigen Alkoholen oder Alkylphenolen sowie Kokosmonoglyceridsulfat, welches besonders umweltverträglich ist.

Die Alkenylester-Copolymerisate können auch zwei- oder mehrsäurige Basen, z.B. Magnesiumoxid oder Zinkoxid als Vernetzungsmittel enthalten.

Besonders wirksam als Emulgatoren haben sich Alkylpolyglycoside und Polyglucosid-Fettalkohol-Verbindungen gezeigt.

Des Weiteren können die Alkenylester-Copolymerisate nicht-ionische Tenside, wie z. B. Alkylpolyglykolether oder Alkylarylpolyglykolether mit bis zu 40 Glykoleinheiten enthalten.

Es hat sich herausgestellt, dass die Copolymere besonders gut polare Flüssigkeiten absorbieren, wenn als Alkenylester Alkenylacetat sowie als ethylenisch ungesättigte Carbonsäure Crotonsäure sowie Hydroxyethyl-Cellulose und/oder Polyvinylalkohol als Schutzkolloid eingesetzt werden. Je nach den copolymerisierten sauren oder basischen Hilfsmonomeren ist die Menge der aufgenommenen polaren Flüssigkeiten über den pH-Wert steuerbar.

Die Herstellung der verwendeten gel-bildenden Polymere auf Basis von Alkenylester-Copolymerisaten erfolgt üblicherweise mittels eines Suspensions- oder Dispersions-Polymerisationsverfahrens. Im Einzelnen kann das Herstellungsverfahren folgende Schritte umfassen:
I. Lösung von einem oder mehreren Schutzkolloiden in einer wässrigen Phase in einem Reaktionsgefäß;
II. Spülung eines über der wässrigen Phase verbleibenden Luftraums mit Stickstoff;
III. Einbringen eines ersten Teils eines Monomerengemisches bestehend aus Monomeren der Gruppe der Alkenylester von unverzweigten oder verzweigten Alkylcarbonsäuren mit 1 bis 18 C-Atomen gemäß der Formel 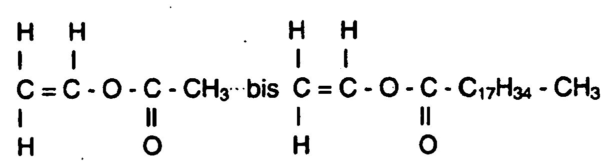 und/oder (Meth)-acrylsäurealkylester mit 3 bis 18 C-Atomen im Alkylrest und ethylenisch ungesättigte Mono- und/oder Di-Carbonsäuren mit 3 bis 11 C-Atomen und/oder Teilester von Poly-Carbonsäuren mit Alkoholen zwischen 1 und 18 C-Atomen und/oder Teilester von gesättigten Polycarbonsäuren mit ethylenisch ungesättigten und mindestens 3 C-Atome aufweisenden, stabilisierend wirkenden Comonomeren sowie einer äquivalenten Menge eines oder mehrerer Vernetzungsmittel als Polymerisationskatalysator in die wässrige Phase und Erwärmen des Gemisches auf 40 bis 70°C;
IV.Zugabe eines Reduktionsmittels bei einer Temperatur zwischen 50 und 55°C;
V. Weitere Erwärmung der Temperatur im Reaktionsgefäß und Zugabe des restlichen Monomerengemisches gemäß Verfahrensschritt III. bei einer Temperatur von mindestens 65°C.

Zudem können im Verfahrensschritt I. Emulgatoren zugegeben, und in der wässrigen Phase gelöst werden. Zur Verringerung des Rest-Monomeren-Gehaltes kann ein weiterer Verfahrensschritt VI. ausgeführt werden, bei dem eine weitere Temperaturerhöhung im Reaktionsgefäß auf 80 bis 95°C erfolgt. Dabei kann weiteres Reduktionsmittel zugegeben werden. Der Verfahrensschritt VI. wird ausgeführt, wenn alle Komponenten des gel-bildenden Polymers zugegeben wurden und die exotherme Reaktion aufgehört hat. Anschließend wird die entstandene Dispersion oder Suspension auf Raumtemperatur abgekühlt. Man erhält Dispersionen oder Suspensionen mit einem Feststoffgehalt von circa 60%. Wird die Polymerisation so gesteuert, dass Verzweigungen und Pfropfungen bei hohem Molekulargewicht entstehen, kann auf die Zugabe von vernetzenden Monomeren in den Verfahrensschritten III. und V. verzichtet werden. Bevorzugterweise wird das Monomerengemisch im Verfahrensschritt III. auf 55 bis 65°C erwärmt, das Monomerengemisch im Verfahrensschritt V. auf 75 bis 85°C.

Der für die Durchführung der Polymerisation günstigste pH-Wert liegt zwischen 2,5 und 10, bevorzugt zwischen 4 und 8, und richtet sich auch nach den eingesetzten sauren oder basisch aktiven Co-Monomeren, um die Wasserlöslichkeit der Copolymerisate während der Polymerisation möglichst niedrig zu halten. Der gewünschte pH-Wert wird durch Säuren, Basen und/oder Puffersalze eingestellt. Zur Molekulargewichtseinstellung werden die für die Polymerisation bekannten Regler in geringen Mengen, wie z. B. Mercaptane, Aldehyde oder Chlorkohlenwasserstoffe verwendet. Wurde das Polymer nach dem Suspensions-Verfahren polymerisiert, so wird die Suspension in üblicher Weise gebrochen, das Serum abgetrennt und das verbleibende Polymerisat schonend und unter Vermeidung von Klumpenbildung getrocknet. Je nach den eingesetzten Co-Monomeren ist die Wahl des richtigen pH-Werts beim Brechen der Suspension besonders wichtig. Wenn für die Polymerisation des Dispersions-Verfahren gewählt wurde, dann kann die Dispersion unter Zugabe von weiterem Schutzkolloid und einem Verblockungs-Verhinderungshilfsmittel in einem Sprühturm, wie er für die Erzeugung von Milchpulver seit langem bekannt ist, im Sprühtrocknungsverfahren getrocknet werden. Die Struktur der sprühgetrockneten, gel-bildenden Co-Polymere ist für die Anwendung zur Absorption polarer Flüssigkeiten wegen der entstehenden großen Oberfläche besonders günstig. Eine offenporige, sehr absorptionsfähige Struktur erhält man auch mit der Wirbelschichttrocknung. Das fertige, trockene Produkt kann in jedem beliebigen Behälter, auch im Pulver-Silo, gelagert und versandt werden.

Es ist auch möglich, dass unmittelbar vor dem Trocknen, z.B. dem Wirbelschichttrocknen oder dem Sprühtrocknen, der nicht oder wenig vernetzten Suspension oder Dispersion zwei- oder mehrsäurige Basen zur Vernetzung zugegeben werden.

### Beispiele:

Das Herstellungsverfahren der gel-bildenden Polymere wird durch folgende Beispiele näher erläutert:

### Beispiel 1:

In einen Polymerisationsreaktor mit Rückflußkühler, drehzahlreguliertem Rührer und beheiz- und kühlbarem Reaktormantel werden 45 Gewichtsteile vollentsalztes Wasser, 1,5 Gewichtsteile Hydroxyethylcellulose, 0,6 Gewichtsteile Laurylethersulfat, 1,4 Gewichtsteile Fettalkoholpolyglucosid und 0,3 Gewichtsteile Fettalkoholpolyglykolether butylverethert sowie 0,4 Gewichtsteile Vinylsulfonat gegeben. Nach gründlichem Spülen des freien Reaktorraumes mit Stickstoff, werden 25 Gewichtsprozent des Monomerengemisches, das aus 50 Gewichtsteilen Ethenylacetat, 1,5 Gewichtsteilen Butylacrylat, 4 Gewichtsteilen Crotonsäure, 0,2 Gewichtsteilen Acrylsäure, 0,2 Gewichtsteilen Acrylamid, 0,08 Gewichtsteilen Diethenylsebacat und 0,4 Gewichtsteilen tert. i-Butylhydroperoxid vorgemischt wurde, in den Reaktor gegeben und das Reaktionsgemisch erwärmt. Bei einer Temperatur zwischen 50 und 55°C wird langsam mit der Zugabe des Reduktionsmittels begonnen, das aus 14 Gewichtsteilen vollentsalztem Wasser, in dem 0,08 Gewichtsteile Natriumformaldehydsulfoxylat (Brüggolit oder Rongalit C) und 0,08 Gewichtsteile Natriumcarbonat gelöst wurden, hergestellt wurde. Die Zugabe soll sich etwa über eine Stunde erstrecken. Darauf wird der restliche Teil der Monomermischung ab einer Temperatur von 65°C zugegeben und während der Polymerisation die Temperatur im Reaktor vorsichtig auf ca. 85°C gebracht. Nachdem alle Stoffe zugegeben sind, polymerisiert man noch einundeinhalb bis zwei Stunden bei etwa 80 - 95°C, bevorzugt bei etwa 90°C, unter Zusatz von 0,1 Gewichtsteilen Natriumformaldehydsulfoxylat und vorsichtiger Zugabe von 0,1 Gewichtsteilen tert. i-Butylhydroperoxid nach und kühlt ab. Die Fertigstellung erfolgt wie im Beispiel 2 beschrieben.

### Beispiel 2:

In einen Polymerisationsreaktor mit Rückflusskühler, drehzahlregulierbarem Rührer, Dosiereinrichtungen, Stickstoffeinleitung und beheiz- und kühlbarem Reaktormantel werden 45 Gewichtsteile vollentsalztes Wasser, 2,7 Gewichtsteile Hydroxyethylcellulose, 0,05 Gewichtsprozent eines Alkyl-sulfats und 0,7 Gewichtsteile eines mit durchschnittlich 15 Mol Ethylenoxid veretherten Isotridecylalkohols gegeben. Nach gründlichem Spülen des freien Reaktorraumes mit Stickstoff, werden 22 Gewichtsprozent des Monomergemisches, das aus 41,2 Gewichtsteilen Ethenylacetat, 0,5 Gewichtsteilen Isononanethenylester, 4,6 Gewichtsteilen n-Butyl-acrylat, 6,8 Gewichtsteilen Crotonsäure, 0,05 Gewichtsteilen Diethenylsebacat, 0,4 Gewichtsteilen Acrylsäure, 0,4 Gewichtsteilen Acrylamid und 0,2 Gewichtsteilen tert. i-Butylhydroperoxid vorgemischt wurde, in den Reaktor gegeben und das Reaktionsgemisch erwärmt. Bei einer Temperatur zwischen 50 und 55°C wird langsam mit der Zugabe des Reduktionsmittels begonnen, das aus 15 Gewichtsteilen vollentsalztem Wasser, in dem 0,08 Gewichtsteile Natriumformaldehydsulfoxylat (Brüggolit oder Rongalit C) und 0,08 Gewichtsteile Natriumcarbonat gelöst sind, hergestellt wurde. Die Zugabe soll sich etwa über eine Stunde erstrecken. Darauf wird der verbleibende Teil der Monomermischung ab einer Temperatur von etwa 65°C zugegeben, und während der Polymerisation die Temperatur im Reaktor vorsichtig auf 80°± 2°C. Nachdem alle Stoffe zugegeben sind, polymerisiert man noch einundeinhalb bis zwei Stunden bei etwa 80 - 95°C, bevorzugt bei etwa 90°C, nach und kühlt ab. Kennzeichnend für das Verfahren ist die Polymerisation aus wässriger Phase, während die Neutralisation entweder als Mischung fertiger Pulver oder durch Zumischen mit biologisch gut verträglichen Oxiden schwacher Basenbildner durch Injektion bei der Wirbelschichttrocknung, durch gasförmige Basenbildner, in nicht polaren Lösungsmitteln oder durch Injektion von verdünnten Basen direkt vor der Versprühung des Schnee bildend Gemisches über eine Dosierpumpe in der "Schneekanone" erfolgen kann. Besonders gute Ergebnisse erzielt man, wenn nach der Dosierung der Basen und vor der Versprühung ein Statikmischer eingesetzt wird.

### Beispiel 3:

Wie im Beispiel 2 wurde ein Polymerharz der gleichen Zusammensetzung hergestellt, jedoch eine höhermolekulare Hydroxyethylcellulose zugegeben und auf den Zusatz von Emulgatoren verzichtet und während der Polymerisation die Rührgeschwindigkeit erhöht. Dadurch erhält man eine Polymer-Suspension. Durch Erniedrigung des pH-Wertes und Zugabe von Natriumsulfat kann die Suspension gebrochen werden und das anfallende Präzipitat wird von der wässrigen Phase abgetrennt und im Drehrohr- oder im Wirbelschichttrockner vorsichtig getrocknet, so dass das Polymer nicht verblockt. Das Polymer wird wie im Beispiel 2 neutralisiert und man erhält wieder ein voluminöses, gel-bildendes Pulver, das zur Herstellung von Gelen, als "Superabsorbent" oder für die anderen, weiter vorn erwähnten Anwendungen eingesetzt werden kann.

### Beispiel 4:

In einem Polymerisationsreaktor mit Rückflusskühler, drehzahlreguliertem Rührer und beheiz- und kühlbarem Reaktormantel werden 45 Gewichtsteile vollentsalztes Wasser, 1,5 Gewichtsteile Hydroxyethylcellulose, 0,8 Gewichtsteile Laurylethersulfat, 1,4 Gewichtsteile Fettalkoholpolyglucosid und 0,3 Gewichtsteile Fettalkoholpolyglykolether, endgruppenverschlossen, sowie 0,4 Gewichtsteile Vinylsulfonat gegeben. Nach gründlichem Spülen des freien Reaktorraumes mit Stickstoff werden 25 Gewichtsprozent des Monomerengemisches, das aus 50 Gewichtsteilen Ethenylacetat, 1,5 Gewichtsteilen Butylacrylat, 4 Gewichtsteilen Crotonsäure, 0,2 Gewichtsteilen Acrylsäure, 0,2 Gewichtsteilen Acrylamid und 0,4 Gewichtsteilen tert.-i-Butylhydroperoxid vorgemischt wurde, in den Reaktor gegeben und das Reaktionsgemisch auf 50 bis 55°C erwärmt. Nach Erreichen der Temperatur wird langsam mit der Zugabe des Reduktionsmittels begonnen, das aus 14 Gewichtsteilen vollentsalztem Wasser, in dem 0,08 Gewichtsteile Natriumformaldehydsulfoxylat (Brüggolit oder Rongalit C) und 0,08 Gewichtsteile Natriumcarbonat gelöst wurden, hergestellt wurde. Die Zugabe soll sich etwa über eine Stunde erstrecken. Darauf wird der restliche Teil der Monomermischung ab einer Temperatur von ca. 65°C zugegeben und während der Polymerisation die Temperatur im Reaktor vorsichtig auf ca. 85°C gebracht. Nachdem alle Stoffe zugegeben sind, polymerisiert man noch einundeinhalb bis zwei Stunden bei etwa 90°C unter Zusatz von 0,1 Gewichtsteilen Natriumformaldehydsulfoxylat und vorsichtiger Zugabe von 0,1 Gewichtsteilen tert.-i-Butylhydroperoxid nach und kühlt ab. Die Fertigstellung erfolgt durch Trocknen der entstandenen Polymerdispersion im Sprühtürm oder im Wirbelschichttrockner unter Zudosierung einer Suspension von Magnesiumoxid, die auf einen pH-Wert von 8,5 eingestellt wurde, im stöchiometrischen Verhältnis zur Säurezahl der Polymerdispersion. Es entsteht ein gel-bildendes Polymer, das über Magnesiumoxid vernetzt wurde.

Ein erfindungsgemäßes Verfahren zur Herstellung von Kunstschnee weist folgende Verfahrensschritte auf:
a) Herstellung einer schwach sauren Dispersion mit einem pH-Wert zwischen 4,0 und 5,5 mindestens eines gel-bildenden Polymers, wobei das gel-bildende Polymer auf Alkenylester-Copolymerisaten basiert und die Alkenylester-Copolymerisate ein oder mehrere Monomere aus der Gruppe der Alkenylester von unverzweigten oder verzweigten Alkylcarbonsäuren mit 1 bis 18 C-Atomen gemäß der Formel 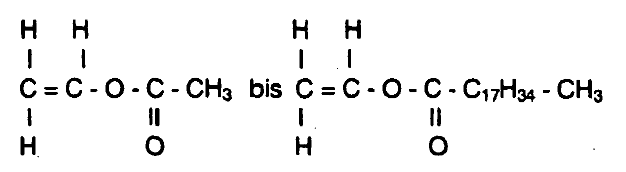 und 0,1 bis 1,0%, bezogen auf das Gewicht aller eingesetzten Monomere, doppelt oder mehrfach ungesättigte Verbindungen als Vernetzungsmittel enthalten;
b) Herstellung einer Mischung des gel-bildenden Polymers mit Schnee, der ausgewählt ist aus der Gruppe natürlicher Schnee, durch eine Schneemaschine mittels Wasser erzeugter Kunstschnee und mit Anteilen Eis versetzter natürlicher Schnee oder Kunstschnee; und
c) Gefrieren der Mischung.

Durch das erfindungsgemäße Verfahren wird ein Kunstschnee bereitgestellt, der einerseits eine deutlich höhere Lebensdauer als natürlicher Schnee auch bei höheren Temperaturen aufweist und andererseits biologisch abbaubar ist.

In einer Ausführungsform des erfindungsgemäßen Verfahrens werden die Verfahrensschritte b) und c) mittels einer Schneemaschine durchgeführt. Dabei kann das gel-bildende Polymer kurz vor einer Sprühdüse der Schneemaschine dem schwach alkalischen Wasser zugegeben werden. Dies geschieht üblicherweise durch direkt vor der Sprühdüse angeordnete Dosierpumpe oder Dosierpumpen. Dem Wasser kann zur Erzielung einer ausreichenden Alkalinität CaCO₃, Ca(OH)₂, MgO oder MgCO₃ zugegeben werden. Der pH-Wert des Wassers liegt vorteilhafterweise bei 8,5. Es ist aber auch möglich, das Wasser-Polymer-Gemisch mit Luft oder anderen Gasen aufzuschäumen und anschließend gefrieren zu lassen.

Eine erfindungsgemäße Schneeauflage besteht aus einer im Vorhergehenden beschriebenen Schneezusammensetzung, wobei die Bestandteile Schnee und gel-bildendes Polymer ungefähr homogen in der Kunstschneeauflage verteilt sind. Es ist aber auch möglich, dass die Schneeauflage schichtweise aufgebaut ist, wobei mindestens eine Schneeschicht die Bestandteile Schnee und gel-bildendes Polymer aufweist und die mindestens eine andere Schneeschicht aus natürlichem Schnee besteht. Als vorteilhaft hat sich erwiesen, wenn die dem Boden abgewandte äußere Schneeschicht der Schneeauflage aus den Bestandteilen Schnee und gel-bildendes Polymer besteht. Durch verstärkt sich der durch die Schnee-Polymer-Mischung erzielte Schutzeffekt.

## Patentansprüche

1. Schneezusammensetzung bestehend aus Schnee, ausgewählt aus der Gruppe natürlicher Schnee, durch eine Schneemaschine erzeugter Kunstschnee und mit Anteilen Eis versetzter natürlicher Schnee oder Kunstschnee, und mindestens einem gel-bildenden Polymer, wobei das gel-bildende Polymer auf Alkenylester-Copolymerisaten basiert und die Alkenylester-Copolymerisate ein oder mehrere Monomere aus der Gruppe der Alkenylester von unverzweigten oder verzweigten Alkylcarbonsäuren mit 1 bis 18 C-Atomen gemäß der Formel 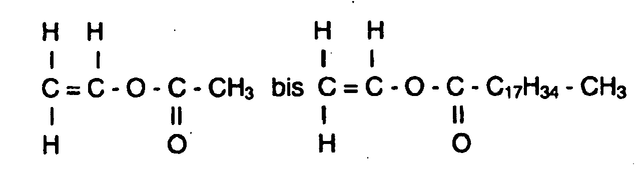 und 0,1 bis 1,0%, bezogen auf das Gewicht aller eingesetzten Monomere, doppelt oder mehrfach ungesättigte Verbindungen als Vernetzungsmittel enthalten.

2. Schneezusammensetzung nach Anspruch 1,
**dadurch gekennzeichnet,**
**dass** der Anteil an gel-bildendem Polymer zwischen 0,1 und 10 Gewichtsprozent bezogen auf den Anteil Schnee beträgt.

3. Schneezusammensetzung nach Anspruch 1 oder 2,
**dadurch gekennzeichnet,**
**dass** das gel-bildende Polymer als schwach saure Dispersion mit einem pH-Wert zwischen 4,0 und 5,5 vorliegt.

4. Schneezusammensetzurig nach einem der vorhergehenden Ansprüche,
**dadurch gekennzeichnet,**
**dass** der Schnee einen pH-Wert zwischen 6,0 und 9,0 aufweist.

5. Schneezusammensetzung nach einem der vorhergehenden Ansprüche,
**dadurch gekennzeichnet,**
**dass** die Alkenylester-Copolymerisate (Meth)-acrylsäurealkylester mit 3 bis 18 C-Atomen im Alkylrest enthalten.

6. Schneezusammensetzung nach einem der vorhergehenden Ansprüche,
**dadurch gekennzeichnet,**
**dass** das Vernetzungsmittel Diethenylsebacat, Diethenyladipat, Hexandioldiacrylat, Divinylbenzol oder Hexadien ist.

7. Schneezusammensetzung nach einem der vorhergehenden Ansprüche,
**dadurch gekennzeichnet,**
**dass** die Alkenylester-Copolymerisate zwei- oder mehrsäurige Basen als Vernetzungsmittel enthalten.

8. Schneezusammensetzung nach einem der vorhergehenden Ansprüche,
**dadurch gekennzeichnet,**
**dass** die A.lkenylester-Copolymerisate ethylenisch ungesättigte Mono- und/oder Di-Carbonsäuren mit 3 bis 11 C-Atomen und/oder Teilester von PolyCarbonsäuren mit Alkoholen zwischen 1 und 18 C-Atomen und/oder Teilester von gesättigten Polycarbonsäuren mit ethylenisch ungesättigten und mindestens 3 C-Atome aufweisenden, stabilisierend wirkenden Comonomeren enthalten.

9. Schneezusammensetzung nach Anspruch 8,
**dadurch gekennzeichnet,**
**dass** die ethylenisch ungesättigte Carbonsäure Crotonsäure ist.

10. Schneezusammensetzung nach Anspruch 8.,
**dadurch gekennzeichnet,**
**dass** das stabilisierend wirkende Comonomer Ethenylsulfonat und/oder Acrylsäure und/oder Acrylamid und/oder N-Methylolacrylamid ist.

11. Schneezusammensetzung nach einem der vorhergehenden Ansprüche,
**dadurch gekennzeichnet,**
**dass** die Allcenylester-Copolymerisate ethylenisch ungesättigte Protonen-Akzeptoren enthalten.

12. Schneezusammensetzung nach Anspruch 11,
**dadurch** gekenntzeichnet
dass die Protonen-Akzeptoren Amino-Gruppen sind.

13. Schneezusammensetzung nach einem der vorhergehenden Ansprüche,
**dadurch gekennzeichnet,**
**dass** die Alkenylester-Copolymerisate Schutzkolloide enthalten.

14. Schneezusammensetzung nach Anspruch 13,
**dadurch gekennzeichnet,**
**dass** die Schutzkolloide Polyvinylalkohole mit einem Verseifungsgrad von 70 bis 97 Mol% und/oder wasserlösliche Cellulosederivate, die durch Carboxymethylierung, Carboxypropylierung, Hydroxypropylierung, Hydroxyethylierung oder Veretherung mit Methylgruppen hergestellt wurden und/oder Dextrane und/oder Polyacrylsäuren und Derivate, Polyacrylamid, wasserlösliche Polyacrylsäure- und Polyacrylamid-Copolmerisate und/oder Gelatine und/oder Kasein und/oder chemisch modifizierte Stärken sind.

15. Schneezusammensetzung nach einem der vorhergehenden Ansprüche,
**dadurch gekennzeichnet,**
**dass** die Alkenylester-Copolymerisate anionische Emulgatoren enthalten.

16. Schneezusammensetzung nach Anspruch 15,
**dadurch gekennzeichnet,**
**dass** die anionischen Emulgatoren Alkylsulfite mit bis zu 18 C-Atomen im Alkylrest und/oder Alkylarylpolyethersulfonate mit 6 bis 18 C-Atomen im Alkylrest und mit bis zu 40 Ethylen- oder Propylen-Einheiten und/oder Alkylpolyethersulfate mit 6 bis 18 C-Atomen im Alkylrest und/oder Alkyl- oder Alkylarylsulfonate mit 6 bis 18 C-Atomen und/oder Ester und Halbester der Sulfobernsteinsäure mit einwertigen Alkoholen oder Alkylphenolen sind.

17. Schneezusammensetzung nach einem der vorhergehenden Ansprüche,
**dadurch gekennzeichnet,**
**dass** die Alkenylester-Copolymerisate Allcylpolyglucoside als Polymerisationsemulgatoren enthalten.

18. Schneezusammensetzung nach einem der vorhergehenden Ansprüche,
**dadurch gekennzeichnet,**
**dass** die Alkenylester-Copolymerisate nichtionische Tenside enthalten.

19. Schneezusammensetzung nach Anspruch 18,
**dadurch gekennzeichnet**
**dass** die nichtionischen Tenside Alkylpolyglykolether oder Alkylarylpolyglykolether mit bis zu 40 Glykoleinheiten sind.

20. Schneeauflage bestehend aus einer Schneezusammensetzung nach einem der Ansprüche 1 bis 19,
**dadurch gekennzeichnet,**
**dass** die Bestandteile Schnee und gel-bildendes Polymer ungefähr homogen in der Kunstschneeauflage verteilt sind.

21. Schneeauflage bestehend aus einer Schneezusammensetzung nach einem der Ansprüche 1 bis 19,
**dadurch gekennzeichnet,**
**dass** die Schneeauflage schichtweise aufgebaut ist, wobei mindestens eine Schneeschicht die Bestandteile Schnee und gel-bildendes Polymer aufweist und die mindestens eine andere Schneeschicht aus natürlichem Schnee besteht.

22. Schneeauflage nach Anspruch 21,
**dadurch gekennzeichnet,**
**dass** die dem Boden abgewandte äußere Schneeschicht aus den Bestandteilen Schnee und gel-bildendes Polymer besteht.

23. Verfahren zur Herstellung von Kunstschnee mit folgenden Verfahrensschritten:
a) Herstellung einer schwach sauren Dispersion mit einem pH-Wert zwischen 4,0 und 5,5 mindestens eines gel-bildenden Polymers, wobei das gel-bildende Polymer auf Alkenylester-Copolymerisaten basiert und die Alkenylester-Copolymerisate ein oder mehrere Monomere aus der Gruppe der Alkenylester von unverzweigten oder verzweigten Alkylcarbonsäuren mit 1 bis 18 C-Atomen gemäß der Formel 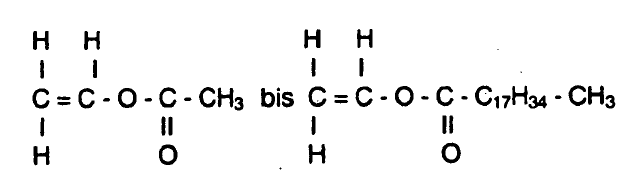 und 0,1 bis 1,0%, bezogen auf das Gewicht aller eingesetzten Monomere, doppelt oder mehrfach ungesättigte Verbindungen als Vernetzungsmittel enthalten;
b) Herstellung einer Mischung des gelbildenden Polymers mit Schnee, der ausgewählt ist aus der Gruppe natürlicher Schnee, durch eine Schneemaschine erzeugter Kunstschnee und mit Anteilen Eis versetzter natürlicher Schnee oder Kunstschnee; und
c) Gefrieren der Mischung.

24. Verfahren nach Anspruch 23,
**dadurch gekennzeichnet,**
**dass** die Verfahrensschritte b) und -c) mittels einer Schneemaschine durchgerührt werden:

25. Verfahren nach Anspruch 24,
**dadurch gekennzeichnet;**
**dass** dem Gemisch gemäß Verfahrensschritt b) zwei- oder mehrsäurige Basen mit mindestens einer in der Schneemaschine angeordneten Dosierpumpe vor der Versprühung im äquimolaren Verhältnis zugesetzt werden.

26. Verfahren nach einem der Ansprüche 23 bis 25,
**dadurch gekennzeichnet,**
**dass** zum Mischen des Gemisches gemäß Verfahrensschritt b) und möglichen weiteren Zusätzen von Alkali vor der Versprühung ein Statikmischer zwischengeschaltet ist.

## Claims

1. Snow composition consisting of snow, selected from the group of natural snow, artificial snow produced by a snow machine, and natural snow or artificial snow mixed with portions of ice, and at least one gel forming polymer, wherein the gel forming polymer is based on alkenyl ester copolymerisates and the alkenyl ester copolymerisates contain one or more monomers from the group of the alkenyl esters of unbranched or branched alkyl carboxylic acids with 1 to 18 C atoms according to the formula 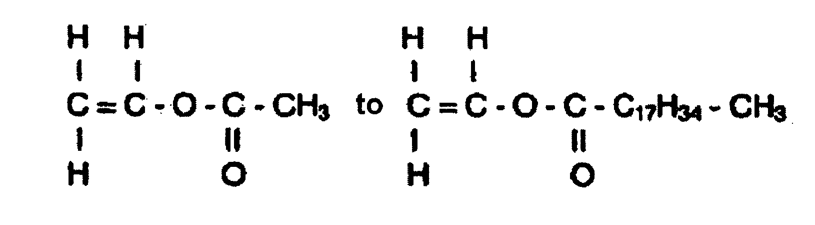 and 0.1 to 1.0 % based on the weight of all of the employed monomers, di-or polyunsaturated compounds as cross-linking agent.

2. Snow composition according to claim 1,
**characterized in that**
the portion of gel forming polymer is between 0.1 and 10 percent by weight based on the portion of snow.

3. Snow composition according to claim 1 or 2,
**characterized in that**
the gel forming polymer is present as a weakly acidic dispersion with a pH value between 4.0 and 5.5.

4. Snow composition according to anyone of the preceding claims,
**characterized in that**
the snow has a pH value between 6.0 and 9.0.

5. Snow composition according to anyone of the preceding claims,
**characterized in that**
the alkenyl ester copolymerisates contain (meth)acrylic acid alkyl ester with 3 to 18 C atoms in the alkyl residue.

6. Snow composition according to anyone of the preceding claims,
**characterized in that**
the cross-linking agent is diethenyl sebacate, diethenyl adipate, hexanediol diacrylate, divinylbenzene or hexadiene.

7. Snow composition according to anyone of the preceding claims,
**characterized in that**
the alkenyl ester copolymerisates contain di- or polyacid bases as the cross-linking agent.

8. Snow composition according to anyone of the preceding claims,
**characterized in that**
the alkenyl ester copolymerisates contain ethylenically unsaturated mono- and/or dicarboxylic acids with 3 to 11C atoms and/or partial esters of polycarboxylic acids with alcohols between 1 and 18C atoms and/or partial esters of saturated polycarboxylic acids with ethylenically unsaturated comonomers acting in stabilizing manner and having at least 3C atoms.

9. Snow composition according to claim 8,
**characterized in that**
the ethylenically unsaturated carboxylic acid is crotonic acid.

10. Snow composition according to claim 8,
**characterized in that**
the comonomer acting in stabilizing manner is ethenyl sulphonate and/or acrylic acid and/or acrylamide and/or N-methylol acrylamide.

11. Snow composition according to anyone of the preceding claims,
**characterized in that**
the alkenyl ester copolymerisates contain ethylenically unsaturated proton acceptors.

12. Snow composition according to claim 11,
**characterized in that**
the proton acceptors are amino groups.

13. Snow composition according to anyone of the preceding claims,
**characterized in that**
the alkenyl ester copolymerisates contain protective colloids.

14. Snow composition according to claim 13,
**characterized in that**
the protective colloids are polyvinyl alcohols with a saponification degree of 70 to 97 mol-% and/or water-soluble cellulose derivatives, which have been prepared by carboxy methylation, carboxy propylation, hydroxy propylation, hydroxyl ethylation or etherification with methyl groups, and/or dextrans and/or polyacrylic acids and derivatives, polyacrylamide, water-soluble polyacrylic acid and polyacrylamide copolymerisates and/or gelatin and/or casein and/or chemically modified starches.

15. Snow composition according to anyone of the preceding claims,
**characterized in that**
the alkenyl ester copolymerisates contain anionic emulsifiers.

16. Snow composition according to claim 15,
**characterized in that**
the anionic emulsifiers are alkyl sulphites with up to 18C atoms in the alkyl residue and/or alkylaryl polyether sulphonates with 6 to 18C atoms in the alkyl residue and with up to 40 ethylene or propylene units and/or alkylpolyether sulphates with 6 to 18C atoms in the alkyl residue and/or alkyl or alkylaryl sulphonates with 6 to 18C atoms and/or esters and semi-esters of the sulphosuccinic acid with monohydric alcohols or alkylphenols.

17. Snow composition according to anyone of the preceding claims,
**characterized in that**
the alkenyl ester copolymerisates contain alkyl polyglucosides as polymerization emulsifiers.

18. Snow composition according to anyone of the preceding claims,
**characterized in that**
the alkenyl ester copolymerisates contain nonionic surfactants.

19. Snow composition according to claim 18,
**characterized in that**
the nonionic surfactants are fatty-alcohol polyglycol ethers or alkylaryl polyglycol ethers with up to 40 glycol units.

20. Snow coating consisting of a snow composition according to any one of claims 1 to 19,
**characterized in that**
the constituents of snow and gel forming polymer are approximately homogeneously distributed in the artificial snow coating.

21. Snow coating consisting of a snow composition according to any one of claims 1 to 19,
**characterized in that**
the snow coating is constructed in layers, wherein at least one snow layer has the constituents of snow and gel forming polymer and the at least one other snow layer consists of natural snow.

22. Snow coating according to claim 21,
**characterized in that**
the outer snow layer facing away from the ground is composed of the constituents of snow and gel forming polymer.

23. Method for producing artificial snow including the following method steps:
a) producing a weakly acidic dispersion having a pH value between 4.0 and 5.5 of at least one gel forming polymer, wherein the gel forming polymer is based on alkenyl ester copolymerisates and the alkenyl ester copolymerisates contain one or more monomers from the group of the alkenyl esters of unbranched or branched alkyl carboxylic acids with 1 to 18 C atoms according to the formula 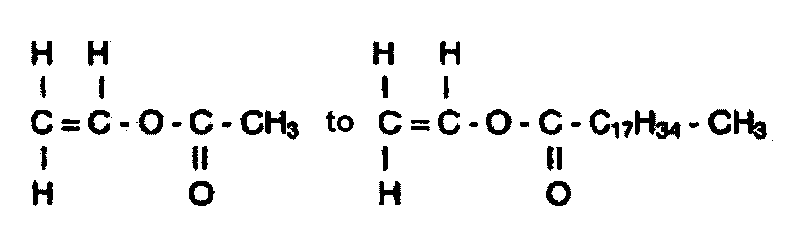 and 0.1 to 1.0 % based on the weight of all of the employed monomers, di- or polyunsaturated compounds as cross-linking agent;
b) producing a mixture of the gel forming polymer with snow, which is selected from the group of natural snow, artificial snow produced by a snow machine and natural snow or artificial snow mixed with portions of ice; and
c) freezing the mixture.

24. Method according to claim 23,
**characterized in that**
the method steps b) and c) are performed by means of a snow machine.

25. Method according to claim 24,
**characterized in that**
di- or polyacid bases are added to the mixture according to method step b) with at least one metering pump disposed in the snow machine before spraying in the equimolar ratio.

26. Method according to any one of claims 23 to 25,
**characterized in that**
a static mixer is interposed for mixing the mixture according to method step b) and possible further additions of alkali before spraying.

## Revendications

1. Composition de neige consistant en de la neige, sélectionnée dans le groupe de neige naturelle, de neige artificielle, produite par le biais d'une machine à neige et de neige naturelle ou de neige artificielle, additionnée de fractions de glace et au moins en un polymère formateur de gel, le polymère formateur de gel reposant sur des copolymérisats d'ester d'alkényle et les copolymérisats d'ester d'alkényle contenant un ou plusieurs monomères sélectionnés du groupe des esters d'alkényle d'acides carboxyliques d'alkyle linéaires ou ramifiés avec 1 à 18 atomes de carbone, conformément à la formule 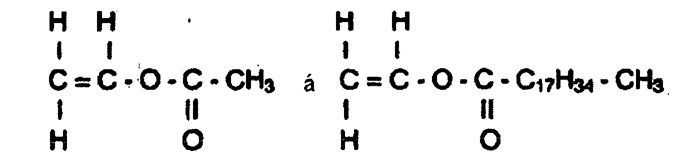 et 0,1 à 1,0 %, par rapport au poids de tous les monomères mis en oeuvre, des liaisons bi-insaturées ou poly-insaturées en tant qu'agent de réticulation.

2. Composition de neige suivant la revendication 1,
**caractérisée en ce**
**que** la fraction de polymère formateur de gel se chiffre entre 0,1 et 10 pour cent en poids par rapport à la fraction de neige.

3. Composition de neige suivant la revendication 1 ou 2,
**caractérisée en ce**
**que** le polymère formateur de gel est présent en tant que dispersion faiblement acide avec une valeur de pH entre 4,0 et 5,5.

4. Composition de neige suivant l'une des revendications précédentes,
**caractérisée en ce**
**que** la neige présente une valeur de pH entre 6,0 et 9,0.

5. Composition de neige suivant l'une des revendications précédentes,
**caractérisée en ce**
**que** les copolymérisats d'ester d'alkényle contiennent des esters d'alkyles d'acides (méth)acryliques avec 3 à 18 atomes de carbone dans le reste alkyle.

6. Composition de neige suivant l'une des revendications précédentes,
**caractérisée en ce**
**que** l'agent de réticulation est du sébacate de diéthényl, de l'adipate de diéthényl, du diacrylate d'hexandiol, du divinylbenzène ou de l'hexadiène.

7. Composition de neige suivant l'une des revendications précédentes,
**caractérisée en ce**
**que** les copolymérisats d'ester d'alkényle contiennent des bases diacides ou polyacides comme agent de réticulation.

8. Composition de neige suivant l'une des revendications précédentes,
**caractérisée en ce**
**que** les copolymérisats d'ester d'alkényle contiennent des mono et / ou diacides carboxyliques à insaturation éthylénique avec 3 à 11 atomes de carbone et / ou des esters partiels de polyacides carboxyliques avec des alcools entre 1 et 18 atomes de carbone et / ou des esters partiels de polyacides carboxyliques saturés avec des comonomères à insaturation éthylénique et présentant au moins 3 atomes de carbone, agissant comme stabilisateur.

9. Composition de neige suivant la revendication 8,
**caractérisée en ce**
**que** l'acide carboxylique à insaturation éthylénique est de l'acide crotonique.

10. Composition de neige suivant la revendication 8,
**caractérisée en ce**
**que** le comonomère agissant comme stabilisateur est du sulfonate d'éthényl et / ou de l'acide acrylique et / ou de l'acrylamide et / ou du N-méthylolacrylamide.

11. Composition de neige suivant l'une des revendications précédentes,
**caractérisée en ce**
**que** les copolymérisats d'ester d'alkényle contiennent des accepteurs de protons à insaturation éthylénique.

12. Composition de neige suivant la revendication 11,
**caractérisée en ce**
**que** les accepteurs de protons sont des groupes amino.

13. Composition de neige suivant l'une des revendications précédentes,
**caractérisée en ce**
**que** les copolymérisats d'ester d'alkényle contiennent des colloïdes protecteurs.

14. Composition de neige suivant la revendication 13,
**caractérisée en ce**
**que** les colloïdes protecteurs sont des alcools polyvinyliques avec un degré de saponification de 70 à 97 moles % et / ou des dérivés de cellulose solubles dans l'eau, qui ont été fabriqués par carboxyméthylation, carboxypropylation, hydroxypropylation, hydroxyéthylation ou éthérification avec des groupes méthyles et / ou des dextranes et / ou des acides polyacryliques et leurs dérivés, du polyacrylamide, des copolymérisats d'acides polyacryliques et de polyacrylamides solubles dans l'eau et / ou de la gélatine et / ou de la caséine et / ou des amidons chimiquement modifiés.

15. Composition de neige suivant l'une des revendications précédentes,
**caractérisée en ce**
**que** les copolymérisats d'ester d'alkényle contiennent des émulsifiants anioniques.

16. Composition de neige suivant la revendication 15,
**caractérisée en ce**
**que** les émulsifiants anioniques sont des sulfites d'alkyle avec jusqu'à 18 atomes de carbone dans le reste alkyle et / ou des sulfonates d'alkylarylpolyéther avec 6 à 18 atomes de carbone dans le reste alkyle et avec jusqu'à 40 unités d'éthylène ou de propylène et / ou des sulfates d'alkylpolyéther avec 6 à 18 atomes de carbone dans le reste alkyle et / ou des sulfonates d'alkyle ou d'alkylaryle avec 6 à 18 atomes de carbone et / ou des esters et semi-esters de l'acide sulfosuccinique avec des alcools monovalents ou des alkylphénols.

17. Composition de neige suivant l'une des revendications précédentes,
**caractérisée en ce**
**que** les copolymérisats d'ester d'alkényle contiennent des polyglucosides d'alkyle comme émulsifiants de polymérisation.

18. Composition de neige suivant l'une des revendications précédentes,
**caractérisée en ce**
**que** les copolymérisats d'ester d'alkényle contiennent des tensioactifs non ioniques.

19. Composition de neige suivant la revendication 18,
**caractérisée en ce**
**que** les tensioactifs non ioniques sont des éthers de polyglycol d'alkyle ou des éthers de polyglycol d'alkylaryle avec jusqu'à 40 unités de glycol.

20. Revêtement de neige consistant en une composition de neige suivant l'une des revendications 1 à 19,
**caractérisé en ce**
**que** les composants neige et polymère formateur de gel sont répartis de manière à peu près homogène dans la couche de neige artificielle.

21. Revêtement de neige consistant en une composition de neige suivant l'une des revendications 1 à 19,
**caractérisé en ce**
**que** le revêtement de neige est constitué par couches, au moins une couche de neige présentant les composants neige et polymère formateur de gel et la au moins une autre couche de neige se composant de neige naturelle.

22. Revêtement de neige suivant la revendication 21,
**caractérisé en ce**
**que** la couche de neige extérieure, opposée au sol, consiste dans les composants neige et polymère formateur de gel.

23. Procédé de fabrication de neige artificielle avec les étapes de procédé suivantes :
a) fabrication d'une dispersion faiblement acide avec une valeur de pH entre 4,0 et 5,5 au moins d'un polymère formateur de gel, le polymère formateur de gel reposant sur des copolymérisats d'ester d'alkényle et les copolymérisats d'ester d'alkényle contenant un ou plusieurs monomères du groupe des esters d'alkényle d'acides carboxyliques d'alkyle linéaires ou ramifiés avec 1 à 18 atomes de carbone, conformément à la formule 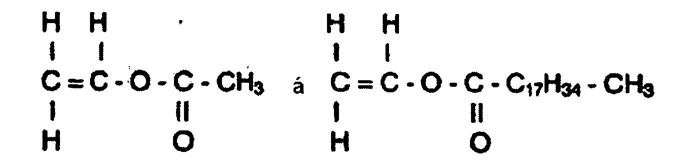 et 0,1 à 1,0 %, par rapport au poids de tous les monomères mis en oeuvre, des liaisons bi-insaturées ou poly-insaturées en tant qu'agent de réticulation ;
b) fabrication d'un mélange du polymère formateur de gel avec de la neige, qui est sélectionnée dans le groupe de neige naturelle, de neige artificielle, produite par le biais d'une machine à neige et de neige naturelle, additionnée de fractions de glace ou de neige artificielle et
c) congélation du mélange.

24. Procédé suivant la revendication 23,
**caractérisé en ce**
**que** les étapes de procédé b) et c) seront exécutées au moyen d'une machine à neige.

25. Procédé suivant la revendication 24,
**caractérisé en ce**
**que** des bases diacides ou polyacides avec au moins une pompe de dosage, disposée dans la machine à neige, sont ajoutées au mélange conformément à l'étape de procédé b) avant la pulvérisation dans une proportion équimolaire.

26. Procédé suivant l'une des revendications 23 à 25,
**caractérisé en ce**
**qu'**un mélangeur statique est intercalé, pour amalgamer le mélange conformément à l'étape de procédé b) et à d'autres ajouts éventuels d'alcali, avant la pulvérisation.
